# EUROPEAN PATENT APPLICATION

(11) **EP 2 746 090 A1**
(43) Date of publication of application: **25.06.2014**
(21) Application number: 13198183.9
(22) Date of filing: 18.12.2013
(51) Int. Cl.: B60K 37/02, B60W 50/14, F16H 59/08, F16H 61/02, F16H 63/42

(54) **Intelligent tachometer**

(30) Priority: 18.12.2012 US 201261738435 P
(71) Applicant: Continental Automotive Systems US, Inc., Auburn Hills, MI 48326 (US)
(72) Inventor: Mejia, Juan Ixta, Jalisco 44320 (MX)
(74) Representative: Shanks, Andrew

(57) **Abstract**

An instrument panel assembly for a motor vehicle includes a housing and an instrument panel surface (14) supported within the housing. A telltale (3) supported on the instrument panel surface is configured to alert a vehicle operator that a shift between gears is desirable responsive to a predetermined vehicle operating condition.

## Description

### TECHNICAL FIELD

The present disclosure relates to a gauge for a vehicle instrument panel, and more specifically to a gauge including features indicating when a gear shift is desirable.

### BACKGROUND

Vehicles include instrument panels to communicate information indicative of operation to an operator. Instrument panels typically include several gauges and dials that communicate vehicle conditions such as speed, engine rpm, temperature, oil pressure along with many other operational parameters.

Vehicles that include a manual transmission rely on an operator knowing the best time to shift between gears. Engine efficiency is dependent on the skill of the operator for current driving conditions. Poor driving habits such as shifting at lower than desirable engine speeds can reduce overall engine efficiency. A tachometer is provided in most vehicles that provides information indicative of engine speed. In some vehicles an arrow is illuminated in the tachometer that indicates when an upshift or downshift is desirable. Such indicators are programed for a certain set of operating conditions that may not match current vehicle conditions. Moreover, while the vehicle instrument panel is intended to display information, it is also an aesthetic part of the vehicle and pleasing designs are desirable to raise interest in the vehicle. Accordingly, it is desirable to design and develop a gauge and system that provides information on when to shift between gears that accounts for current driving conditions and also provides a desirable appearance.

### SUMMARY

A disclosed vehicle instrument panel assembly includes a telltale that changes conditions to communicate when the vehicle is operating at a condition where a shift between gears is desirable. The indication provided to the operator is determined based on a selected engine operating mode. For instance, a vehicle may be placed in a sport mode where vehicle performance is the criteria utilized to determine when best to shift between gears. A city mode may also be selected that provides an indication to a vehicle operator that it is time to shift gears based on engine efficiency to conserve fuel.

A disclosed instrument cluster assembly incorporates functions of the tachometer into the speedometer as a telltale. The engine rpm dial is replaced by an indicator to the operator that communicates to the operator when vehicle speed and engine speed are within a desired range that optimizes engine performance for shifting between gears.

One aspect of the invention relates to an instrument cluster assembly for a motor vehicle comprising:
a housing;
a surface supported within the housing and including graphics representing vehicle speed; and
a telltale supported on the surface configured to alert a vehicle operator that a shift between gears is desirable responsive to a predetermined vehicle operating condition.

The instrument cluster assembly may include at least one indicator communicating a current operating mode of the vehicle.

The instrument cluster assembly may include a main display supported within the housing over the surface, the main display configured to display information indicative of at least one vehicle operating parameter.

The main display may be configured to display current engine speed.

The main display may be disposed within a display housing and the display housing may support telltales indicating when a turn signal is actuated.

The telltale may be configured to change from a first condition indicating that a shift between gears is not desirable to a second condition indicating that a shift between gears is desirable.

The first condition may comprise a first color and the second condition may comprise a second color different than the first color.

The first condition may be a partial filling of an indicator bar indicating an approach of engine speed toward an engine speed desirable for shifting to between gears and the second condition may be a full filling of the indicator bar indicating that the engine speed is desirable for shifting between gears.

The partial filling of the indicator bar in the first condition may be proportional to a difference between the current engine speed and an engine speed desirable for shifting between gears.

The instrument cluster assembly may include a pointer assembly rotatable about an axis for indicating to a graphic on the instrument panel surface.

Another aspect of the invention relates to a speedometer for a motor vehicle comprising:
a housing;
a surface supported within the housing and including graphics representing vehicle speed;
a main display supported within the housing over the surface, the main display configured to display information indicative of at least one vehicle operating parameter including engine speed; and
a telltale supported on the surface configured to alert a vehicle operator that a shift between gears is desirable responsive to a predetermined vehicle operating condition.

The telltale may be configured to change from a first condition indicating that a shift between gears is not desirable to a second condition indicating that a shift between gears is desirable.

The first condition may comprise a first color and the second condition may comprise a second color different than the first color.

The first condition may be a partial filling of an indicator bar indicating an approach of engine speed toward an engine speed desirable for shifting to between gears and the second condition may be a full filling of the indicator bar indicating that the engine speed is desirable for shifting between gears.

The partial filling of the indicator bar in the first condition may be proportional to a difference between the current engine speed and an engine speed desirable for shifting between gears.

Another aspect of the invention relates to a method of indicating conditions are proper for shifting between gears of a motor vehicle comprising:
selecting between a first driving mode and a second driving mode;
displaying first image indicative of engine speed within a telltale supported in a vehicle speedometer;
modifying the first image within the telltale based on a difference between a current engine speed and an engine speed for shifting between gears based on the selected one of the first and second driving modes; and
indicating that current operating conditions are desirable for a shift between gears by changing the first image to a second image.

The first image may comprise an indicator bar and modifying the first image may comprise filling the indicator bar proportionally to illustrate the difference between the current engine speed and an engine speed for shifting between gears.

The second image may comprise a filled indicator bar.

The method may include changing a color of the second image relative to a color of the first image.

The method may include displaying a current engine speed in a main digital display supported within the vehicle speedometer. Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example vehicle dashboard and instrument panel.
Figure 2 is a view of an example instrument cluster disposed within the instrument panel.
Figure 3A is a view of an example instrument cluster with a telltale displaying a first image indicating an approaching operating condition desirable for shifting between gears.
Figure 3B is a schematic view of the instrument cluster with the telltale displaying the first image further indicating an approaching operating condition desirable for shifting between gears.
Figure 3C is a schematic view of the example instrument cluster with the telltale displaying a second image indicating that the operating condition is desirable for shifting between gears.

### DETAILED DESCRIPTION

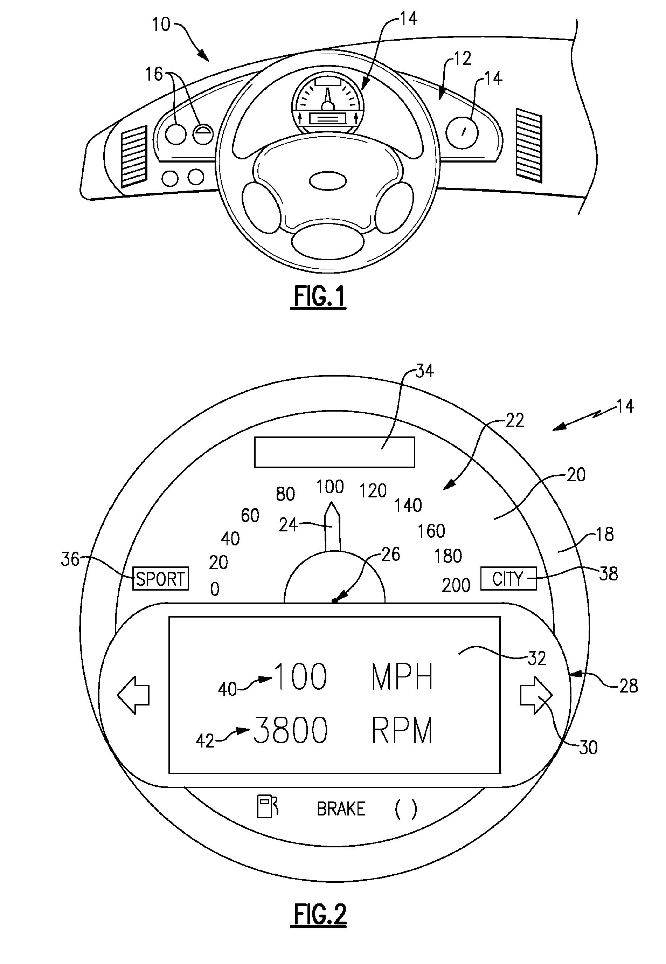

Referring to Figure 1, an example vehicle dashboard 10 is shown and includes an instrument panel 12. The instrument panel 12 includes an instrument cluster assembly 14 indicating vehicle speed and other secondary dials 16 displaying information indicative of other vehicle operating parameters. In this example, the instrument cluster assembly 14 is shown that provides an indication of vehicle speed and also communicates other information to a vehicle operator. The example instrument cluster assembly 14 communicates vehicle speed and engine RPM and some warning tell tales. Although a single instrument cluster assembly 14 is shown in Figure 1, it is within the contemplation of this disclosure that other gauge assemblies may also be utilized within the example instrument panel 12.

Referring to Figure 2, the instrument cluster assembly 14 is a speedometer that provides an indication of current vehicle speed and communicates engine speed in RPM. The instrument cluster assembly 14 includes a housing 18 that supports an instrument cluster surface 20. The instrument cluster surface 20 includes graphics 22 disposed about an axis 26. The graphics 22 communicate and provide a scale for vehicle speed. In the disclosed example, speed is indicated in MPH, but may also be indicated in KMH. A pointer 24 rotates about the axis 26 to point to a specific one of the graphics 22 to indicate vehicle speed.

The instrument cluster assembly 14 also includes a display housing 28 that includes a main display 32. Telltales 30 are supported within the display housing 28. The telltales 30 provide an indication that a turn signal has been actuated. The main display 32 includes a first image 40 that provides a secondary display of vehicle speed in miles per hour. A second image 42 is also displayed on the screen 32 and provides an indication of the current engine speed in rotations per minute (RPM).

The surface 20 includes a first mode indicator 36 and a second mode indicator 38 that indicate a specific driving mode that has been selected by a vehicle operator. In this example, the first mode indicated 36 is shown as a sport mode and is selected when it is desired to optimize engine performance. The second mode indicator 38 is shown as a city mode and is utilized when it is desired to optimize engine efficiency, such as providing the most fuel efficient operation of the vehicle. The first and second driving modes provide for the selection of conditions that are indicative of when shifting between gears should be initiated by a vehicle operator to optimize vehicle performance according to the selected mode. For example, in sport mode, shifts between gears will be at higher engine speeds to provide better acceleration of the vehicle. In contrast, in city mode, shifting between gears is indicated at lower engine speeds to optimize fuel efficiency.

In vehicles that are operated utilizing a manual transmission much of the overall vehicle operating efficiency is determined by the driving habits of the operator. The operator must use their skill and knowledge of driving to perform shifts between gears depending on current vehicle operating conditions. Shifting gears at optimal times during vehicle performance at specific speeds and engine rpm provides the best overall performance or fuel efficiency if performed properly. However, many operators do not possess the skill level required to operate a vehicle at optimal conditions and, therefore, much of the engine efficiency and capability are not realized by a vehicle operator. Moreover, an operator may be distracted by other events during driving a vehicle and, therefore, not be specifically aware that a gear shift may be desirable to operate a vehicle within optimal ranges.

Accordingly, the instrument cluster assembly 14 includes features that prompt a vehicle operator to shift between gears depending on a selected mode to optimize vehicle operation. Moreover, the example instrument cluster assembly 14 includes this information within a central cluster and, therefore, provides a single location for a vehicle operator to focus their attention upon to obtain and be prompted with information indicative of current driving parameters.

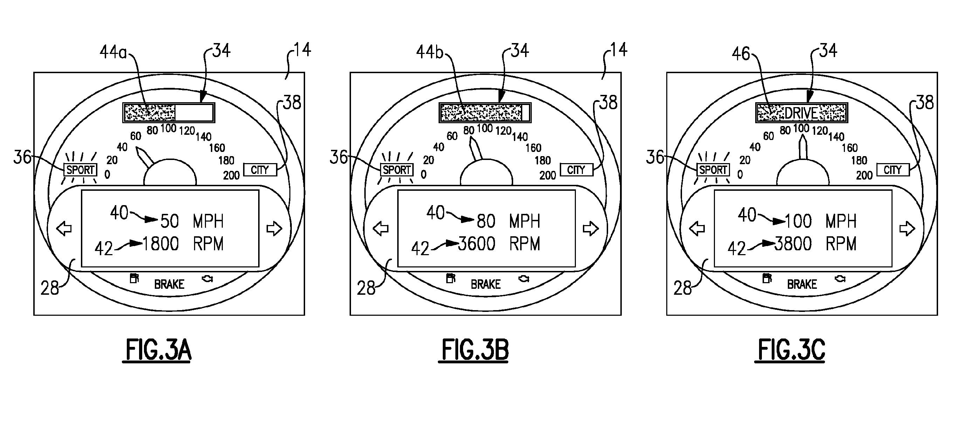

A telltale 34 is supported within the instrument cluster surface 20 of the instrument cluster assembly 14. The telltale 34 operates with sensors (not shown) disposed within the vehicle to receive information indicative of engine speed and the relationship between the current gear. The telltale 34 will then display that information indicative of engine speed 44a-b, best shown in Figures 3a-b. The sequence of pictures shows how engine speed, RPM, increases when the vehicle speed increases without any change in the gear shift. The telltale 34 displays an image indicative of a difference between current engine speed and the engine speed at which a shift between gears is desirable. The main display 32 will display the specific engine rpm to the operator. In this way, between the main display 32 and the telltale 34, a separate engine tachometer is not required because those functions are integrated within the one common instrument cluster assembly 14.

Referring to Figure 3A with continued reference to Figure 2, the instrument cluster assembly 14 is shown in a first condition wherein the vehicle is operating at a specific speed and the engine is also in a specific speed that is indicated on the main display 32. The telltale 34 is displaying a first image 44A that is in a first condition. In this example, the first image is an indicator bar that is filled in proportion to a difference between the current engine speed displayed at 42 and a desired engine speed where a shift between gears becomes desirable. The first mode indicator 36 is illuminated to indicate that the operator has selected sport mode for the determination of when a shift between gears is desirable.

As appreciated, each vehicle will include optimal engine speed ranges for each gear. Moreover, current vehicle operating conditions along with engine speed will correspond to provide an optimal range of engine speeds in which a shift between gears is desirable. In this example, that criteria is determined with regard to the selected mode 36. The example selected mode 36 is a sport mode and provides an increase in engine performance rather than concentrating on fuel efficiency.

During normal operation of the vehicle, the instrument cluster assembly 14 will communicate vehicle speed both on the surface 20 and in the main display 32. The telltale 34 will illuminate the first image 44A in a first condition as an indicator bar. In the first condition illustrated in Figure 3A, the engine speed is approximately halfway between engine speeds that are conducive to a shift between gears. This distance between gear shifts is illustrated in the proportion that the indicator bar 44A is filled in the telltale 34.

Referring to Figure 3B, a second condition is illustrated where the telltale 34 is closer to being completely filled because the engine speed and vehicle speed are such that they are approaching a condition where it is conducive and desirable to perform a shift between gears to maintain optimal performance of the vehicle.

Referring to Figure 3C, telltale 34 is now switched to a second engine image 46 that includes a completely filled indicator bar that has changed from the first color provided by the partially indicated bars of the first images 44A, 44B to the second color indicated by the filled-in indicated bar and second image 46. In this example, the second image 46 includes a completely filled indicator bar along with the word "DRIVE" that prompts an operator to shift between gears to provide vehicle performance according to the sport mode selected.

Referring to Figures 3A, 3B and 3C, the example first images 44A and 44B are shown in red as the indicator bars are filled and approach a completely filled condition that is indicated in Figure 3C and provided by a completely filled indicator bar.

Accordingly, the example instrument cluster assembly 14 provides and communicates prompts to a vehicle operator to improve engine operation according to a selected operating mode. Moreover, the example instrument cluster assembly 14 consolidates tachometer information and functions into a single instrument cluster assembly 14 thereby eliminating the requirement for a separate tachometer. The telltale and information provided in the main display 32 further communicates information required by an operator to perform shifts between gears in a manner that will provide the most efficient vehicle operation according to the selected mode.

Although an example embodiment has been disclosed, a worker of ordinary skill in this art would recognize that certain modifications would come within the scope of this disclosure. For that reason, the following claims should be studied to determine the scope and content of this disclosure.

## Claims

1. An instrument cluster assembly for a motor vehicle comprising:
a housing;
a surface supported within the housing and including graphics representing vehicle speed; and
a telltale supported on the surface configured to alert a vehicle operator that a shift between gears is desirable responsive to a predetermined vehicle operating condition.

2. The instrument cluster assembly as recited in claim 1, including at least one indicator communicating a current operating mode of the vehicle.

3. The instrument cluster assembly as recited in claim 1 or 2, including a main display supported within the housing over the surface, the main display configured to display information indicative of at least one vehicle operating parameter.

4. The instrument cluster assembly as recited in claim 3, wherein the main display is configured to display current engine speed.

5. The instrument cluster assembly as recited in claim 4, wherein the main display is disposed within a display housing and the display housing supports telltales indicating when a turn signal is actuated.

6. The instrument cluster assembly as recited in any one of the preceding claims wherein the telltale is configured to change from a first condition indicating that a shift between gears is not desirable to a second condition indicating that a shift between gears is desirable.

7. The instrument cluster assembly as recited in claim 6, wherein the first condition comprises a first color and the second condition comprises a second color different than the first color.

8. The instrument cluster assembly as recited in claim 6, wherein the first condition is a partial filling of an indicator bar indicating an approach of engine speed toward an engine speed desirable for shifting to between gears and the second condition is a full filling of the indicator bar indicating that the engine speed is desirable for shifting between gears.

9. The instrument cluster assembly as recited in claim 8, wherein the partial filling of the indicator bar in the first condition is proportional to a difference between the current engine speed and an engine speed desirable for shifting between gears.

10. The instrument cluster assembly as recited in any one of the preceding claims including a pointer assembly rotatable about an axis for indicating to a graphic on the instrument panel surface.

11. A speedometer for a motor vehicle comprising the instrument cluster as recited in any one of the preceding claims and further comprising:
a main display supported within the housing over the surface, the main display configured to display information indicative of at least one vehicle operating parameter including engine speed.

12. A method of indicating conditions are proper for shifting between gears of a motor vehicle comprising:
selecting between a first driving mode and a second driving mode;
displaying first image indicative of engine speed within a telltale supported in a vehicle speedometer;
modifying the first image within the telltale based on a difference between a current engine speed and an engine speed for shifting between gears based on the selected one of the first and second driving modes; and
indicating that current operating conditions are desirable for a shift between gears by changing the first image to a second image.

13. The method as recited in claim 12, wherein the first image comprises an indicator bar and modifying the first image comprises filling the indicator bar proportionally to illustrate the difference between the current engine speed and an engine speed for shifting between gears.

14. The method as recited in claim 13, wherein the second image comprises a filled indicator bar.

15. The method as recited in claim 14, including changing a color of the second image relative to a color of the first image.

16. The method as recited in any one of claims 12 to 15 including displaying a current engine speed in a main digital display supported within the vehicle speedometer.
